# FASCICULE DE BREVET EUROPEEN

(11) **EP 2 558 831 B1**
(45) Date de publication et mention de la délivrance du brevet: **18.06.2014**
(21) Numéro de dépôt: 11718453.1
(22) Date de dépôt: 05.04.2011
(51) Int. Cl.: G01K 1/14, G01K 13/02, F01D 17/08

(54) **DISPOSITIF DE MESURE DE LA TEMPERATURE DANS UNE VEINE D'ECOULEMENT DE FLUX PRIMAIRE D'UN TURBOREACTEUR A DOUBLE FLUX.**
VORRICHTUNG ZUR MESSUNG DER TEMPERATUR IN EINEM STRÖMUNGSKANAL DES PRIMÄRFLUSSES EINES MANTELSTROMTRIEBWERKS
DEVICE FOR MEASURING THE TEMPERATURE IN A FLOW CHANNEL OF THE PRIMARY FLOW OF A BYPASS TURBOJET ENGINE.

(30) Priorité: 12.04.2010 FR 1052760
(43) Date de publication de la demande: 20.02.2013
(73) Titulaire: Snecma, 75015 Paris (FR)
(72) Inventeur: GAULLY, Bruno, Robert, F-91630 Marolles En Hurepoix (FR); POIX, Thierry, F-77190 Dammarie Les Lys (FR); VERNOCHET, Maurice, Georges, F-77000 La Rochette (FR)
(74) Mandataire: Boura, Olivier
(86) Numéro de dépôt international: PCT/FR2011/050758
(87) Numéro de publication internationale: WO 2011/128555

(56) Documents cités:
- EP-A1- 1 865 184
- US-A- 4 710 095
- US-A- 5 397 181

## Description

### Arrière-plan de l'invention

La présente invention se rapporte au domaine général de la mesure de la température dans le flux primaire d'un turboréacteur à double flux et double corps, cette mesure étant réalisée au niveau de l'entrée du compresseur haute-pression.

Dans un turboréacteur à double flux et double corps, la mesure de la température du flux gazeux s'écoulant dans la veine d'écoulement primaire qui est effectuée au niveau de l'entrée du compresseur haute-pression de celui-ci (cette température est aussi appelée « température T₂₅ ») est utilisée dans de nombreuses lois de régulation du turboréacteur. La mesure de la température T₂₅ apparaît notamment dans les lois de consigne de la position des différentes géométries variables du turboréacteur.

Il est connu de réaliser la mesure de la température T₂₅ au moyen d'une sonde de température qui est placée directement dans la veine d'écoulement du flux primaire en entrée du compresseur haute-pression. Le plus souvent, ces sondes comprennent un corps de fonderie muni d'un séparateur inertiel destiné à protéger l'élément sensible de la sonde contre l'humidité, l'eau, la glace, le sable et autres corps étrangers. Le corps de fonderie peut également comporter une résistance chauffante activée pour empêcher la formation de glace risquant d'obstruer l'entrée de la sonde ou dont la masse pourrait endommager les aubages aval. Examples de mesure de température dans un turboréacteur peuvent être trouvés dans les documents EP 1 865 184 A1, US 4 710 095 A, US 5 397 181 A.

Ce type de sonde à séparateur inertiel présente de nombreux inconvénients. En particulier, le corps de fonderie est complexe à fabriquer, ce qui rend le coût de la sonde élevé. De plus, le sillage créé par la présence de la sonde dans la veine d'écoulement du flux primaire perturbe cet écoulement lorsqu'il pénètre dans le compresseur haute-pression. En outre, la fonction de dégivrage de la sonde nécessite une alimentation électrique extérieure et un relais de commutation dans le calculateur électronique du turboréacteur, ainsi qu'une correction par logiciel de l'erreur de mesure induite par le chauffage du corps de fonderie. Enfin, la sonde doit résister aux sollicitations aérodynamiques hautes fréquences.

### Objet et résumé de l'invention

La présente invention a donc pour but principal de proposer un dispositif de mesure de la température T₂₅ qui ne présente pas les inconvénients précités.

Ce but est atteint grâce à un dispositif de mesure de la température dans une veine d'écoulement de flux primaire d'un turboréacteur à double flux en entrée de compresseur, comprenant une structure creuse et hermétique formant bras de liaison d'un carter intermédiaire du turboréacteur et destinée à traverser radialement une veine d'écoulement du flux primaire et une veine d'écoulement du flux secondaire du turboréacteur, le bras de liaison ayant au moins un orifice d'entrée d'air destiné à s'ouvrir dans la veine d'écoulement du flux primaire en entrée d'un compresseur et au moins un orifice de sortie d'air destiné à déboucher dans une zone du turboréacteur où la pression environnante est inférieure à la pression dans la veine d'écoulement du flux primaire en entrée du compresseur, le dispositif comprenant en outre une sonde de température dont l'élément sensible est disposé à l'intérieur du bras de liaison.

Avec le dispositif selon l'invention, l'intérieur du bras de liaison dans lequel est monté l'élément sensible de la sonde de température est traversé par un flux gazeux prélevé dans la veine d'écoulement du flux primaire et ensuite évacué dans la veine d'écoulement du flux secondaire. Le dispositif selon l'invention permet donc de mesurer la température T₂₅.

L'invention prévoit d'intégrer une sonde de température dans un bras de liaison du carter intermédiaire du turboréacteur. L'élément sensible de la sonde de température qui est logé à l'intérieur de ce bras de liaison est ainsi protégé des projections d'eau et des impacts avec des corps étrangers (glace, sable, etc.). De la sorte, la sonde de température du dispositif selon l'invention peut être de conception simple et donc de coût peu élevé (car notamment dépourvue de corps de fonderie). De plus, il n'est pas nécessaire de recourir à une fonction de dégivrage de la sonde, ce qui supprime les inconvénients liés à une telle fonction (alimentation électrique extérieure, relais de commutation dans le calculateur électronique du turboréacteur, et logiciel de correction de l'erreur de mesure). En outre, le dispositif selon l'invention n'occasionne aucun sillage supplémentaire (par rapport à ceux existants) dans l'écoulement du flux primaire. Enfin, la sonde de température du dispositif selon l'invention n'est plus soumise aux sollicitations aérodynamiques hautes fréquences.

Le bras de liaison peut comprendre deux parois latérales reliées entre elles de façon hermétique, d'une part par des parois formant bord d'attaque et bord de fuite, et d'autre part par des parois transversales.

Dans ce cas, de préférence, l'orifice d'entrée d'air du bras de liaison est formé dans une paroi latérale et l'orifice de sortie d'air dans la paroi formant bord de fuite. La présence de l'orifice d'entrée d'air au niveau d'une paroi latérale du bras de liaison permet de minimiser les risques d'obstruction de cette entrée d'air par la formation de glace (en effet, la glace se forme généralement au niveau du bord d'attaque des bras de liaison). Quant à l'orifice de sortie d'air situé au bord de fuite, il présente l'avantage de diriger le flux sortant dans le sens d'écoulement du flux secondaire.

Quant à la sonde de température, elle est avantageusement montée de façon étanche contre la paroi du bras de liaison formant bord de fuite. Cette sonde de température peut être du type crayon.

De plus, une cloison peut s'étendre radialement depuis l'une des parois transversales afin d'améliorer l'écoulement de l'air autour de la sonde de température en le confinant dans un espace restreint.

L'orifice de sortie d'air du bras de liaison peut être destiné à déboucher dans la veine d'écoulement du flux secondaire du turboréacteur.

L'invention a également pour objet un carter intermédiaire de turboréacteur à double flux comprenant un moyeu, une virole annulaire extérieure disposée autour du moyeu de façon concentrique à celui-ci et un dispositif tel que défini précédemment, le bras de liaison du dispositif reliant radialement le moyeu à la virole extérieure.

L'élément sensible de la sonde de température du dispositif est de préférence disposé à l'intérieur du bras de liaison de façon à s'étendre selon une direction sensiblement parallèle à l'axe de révolution du moyeu et de la virole. De la sorte, l'élément sensible de la sonde est disposé transversalement par rapport à l'écoulement longitudinal du flux gazeux prélevé.

L'invention a encore pour objet un turboréacteur à double flux comprenant un carter intermédiaire tel que défini ci-dessus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et en coupe longitudinale d'un turboréacteur à double flux et double corps montrant l'emplacement du dispositif de mesure selon l'invention ;
- la figure 2 est une vue de derrière du carter intermédiaire du turboréacteur de la figure 1 ;
- la figure 3 est une vue en coupe selon III-III de la figure 2 ; et
- la figure 4 est une vue schématique et en perspective du dispositif de mesure de la figure 3.

### Description détaillée d'un mode de réalisation

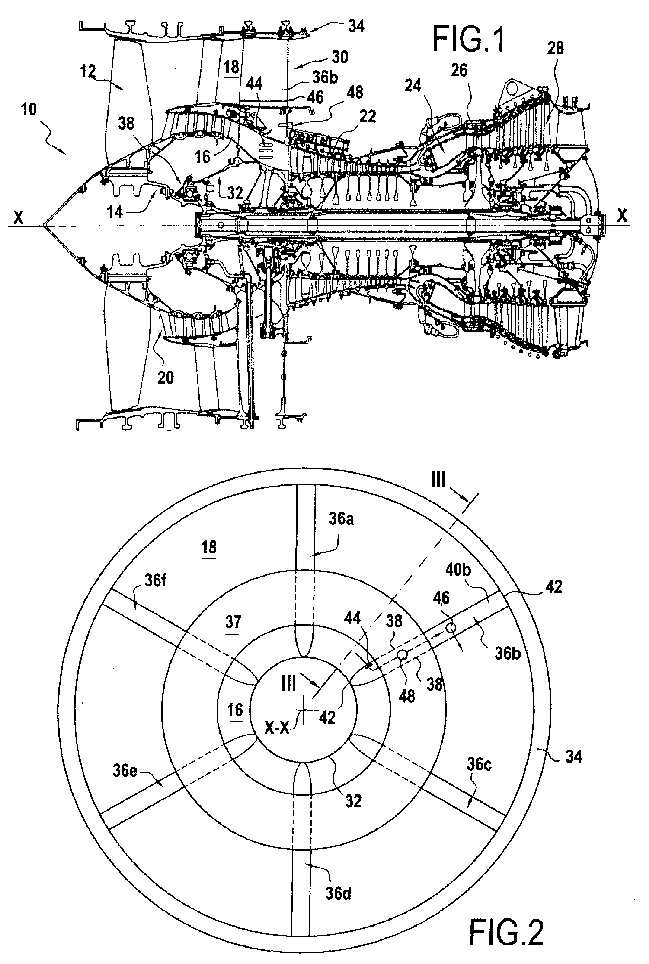

La figure 1 représente de façon schématique un turboréacteur 10 du type à double flux et double corps auquel s'applique en particulier l'invention. Bien entendu, l'invention n'est pas limitée à ce type particulier de turboréacteur et s'applique à d'autres architectures de turboréacteurs à double flux et double corps.

De façon bien connue, le turboréacteur d'axe longitudinal X-X comprend notamment une soufflante 12 reliée à l'extrémité amont d'un arbre basse-pression 14. Le turboréacteur comprend en outre deux veines coaxiales d'écoulement de flux gazeux, à savoir une veine d'écoulement de flux primaire (ou flux chaud) 16, et une veine d'écoulement de flux secondaire (ou flux froid) 18.

D'amont en aval dans le sens d'écoulement du flux gazeux le traversant, la veine d'écoulement de flux primaire 16 comprend un compresseur basse-pression 20, un compresseur haute-pression 22, une chambre de combustion 24, une turbine haute-pression 26 et une turbine basse-pression 28.

Le turboréacteur comprend également un carter intermédiaire 30 ayant, de façon connue en soi, une fonction structurale (car les efforts sont transmis par son intermédiaire). En particulier, les moyens de fixation du turboréacteur à la structure de l'avion dans la partie avant sont solidaires du carter intermédiaire.

Le carter intermédiaire 30 se compose d'un moyeu 32 centré sur l'axe longitudinal X-X, d'une virole annulaire extérieure 34 disposée autour du moyeu de façon concentrique à celui-ci, et d'une pluralité de bras de liaison 36a à 36f reliant radialement le moyeu à la virole extérieure.

Le moyeu 32 du carter intermédiaire supporte en rotation un palier à roulement avant 38 monté sur l'arbre basse-pression 14 à l'extrémité amont de celui-ci. La virole extérieure 34 délimite en partie à l'extérieur la veine d'écoulement de flux secondaire 18.

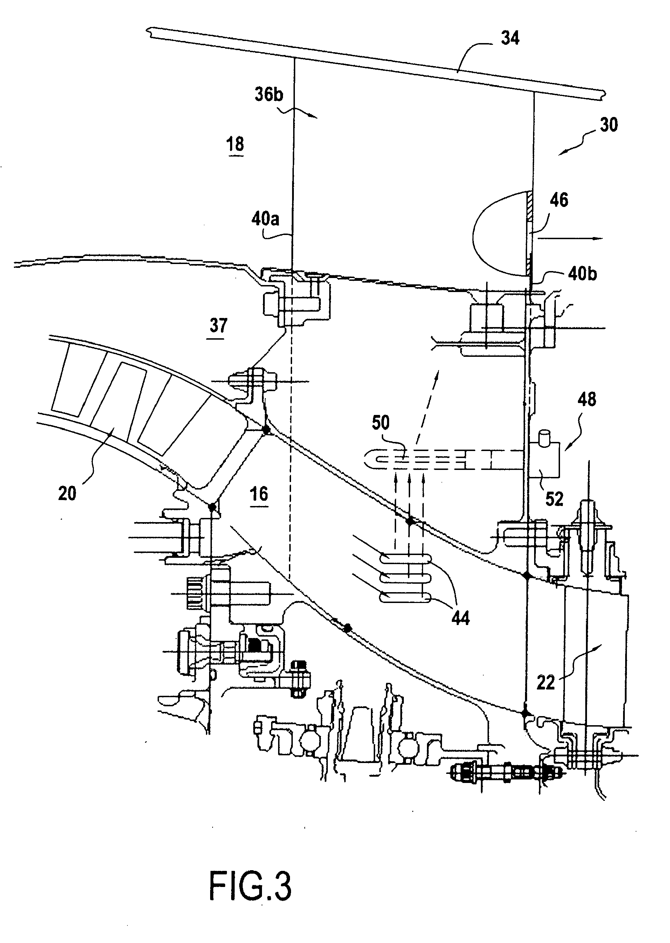

Comme représenté sur la figure 2, les bras de liaison 36a à 36f (par exemple au nombre de six) sont régulièrement répartis autour de l'axe longitudinal X-X du turboréacteur. Ces bras de liaison s'étendent radialement, de l'extérieur vers l'intérieur, au travers de la veine d'écoulement de flux secondaire 18, d'une structure annulaire fixe 37 du turboréacteur et de la veine d'écoulement de flux primaire 16. Par rapport à la veine d'écoulement de flux primaire, ils sont situés au niveau du « col de cygne », c'est-à-dire entre la sortie du compresseur basse-pression 20 et l'entrée du compresseur haute-pression 22 (voir également la figure 3).

Les bras de liaison 36a à 36f se présentent chacun sous la forme d'une structure rigide creuse à l'intérieur de laquelle peuvent être placées différentes servitudes du turboréacteur. Par exemple, pour le turboréacteur des figures 1 et 2, le bras de liaison 36a reçoit les canalisations d'arrivée d'huile et différentes sondes de mesure de la vitesse de l'arbre basse-pression ; le bras de liaison 36d reçoit l'arbre radial pour l'entraînement en rotation du boîtier d'accessoires du moteur et des canalisations de retour d'huile ; et le bras de liaison 36e reçoit des canalisations de drainage d'huile.

L'invention a pour objet un dispositif permettant de mesurer la température du flux gazeux traversant la veine d'écoulement de flux primaire 16 au niveau du col de cygne. La mesure de cette température (appelée température T₂₅) est utilisée dans de nombreuses lois de régulation du turboréacteur.

Selon l'invention, il est prévu, pour réaliser cette mesure, d'utiliser l'un des bras de liaison 36a à 36f du carter intermédiaire 30. Les bras de liaison 36b, 36c et 36f n'étant pas utilisés pour y faire passer des servitudes du moteur, l'un de ces bras de liaison sera préférentiellement choisi (ici, il s'agit du bras de liaison 36b).

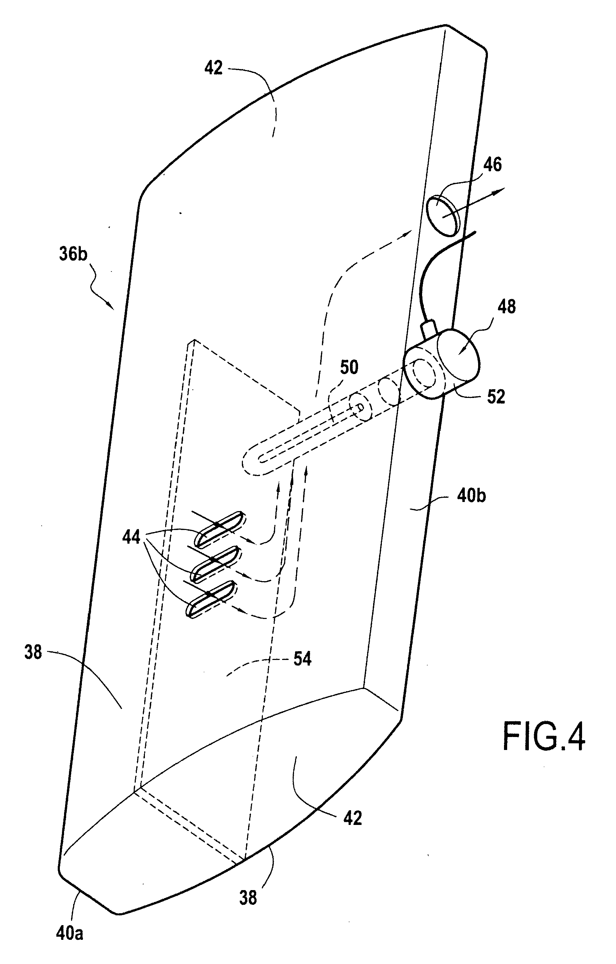

Comme représenté sur la figure 4, le bras de liaison 36b se présente sous la forme d'une structure rigide creuse comprenant notamment deux parois latérales 38 disposées dans un plan longitudinal (par rapport à l'axe longitudinal X-X). Ces parois latérales sont reliées entre elles de façon hermétique, d'une part à leurs extrémités longitudinales par des parois formant bord d'attaque 40a et bord de fuite 40b, et d'autre part à leurs extrémités radiales par des parois transversales 42.

Le volume intérieur délimité par les parois latérales 38, les parois formant bord d'attaque 40a et bord de fuite 40b et les parois transversales 42 est étanche à l'air (à l'exception des orifices d'entrée et de sortie d'air décrits ci-après).

L'une des parois latérales 38 du bras de liaison 36b comprend un ou plusieurs (au nombre de trois sur les figures) orifices d'entrée d'air 44 s'ouvrant dans la veine d'écoulement de flux primaire 16 au niveau du col de cygne et débouchant à l'intérieur de la structure creuse.

Par ailleurs, la paroi 40b bord de fuite du bras de liaison 36b comporte un ou plusieurs orifices de sortie d'air 46 s'ouvrant à l'intérieur de la structure creuse et débouchant dans une zone du turboréacteur où la pression environnante est inférieure à la pression dans la veine d'écoulement du flux primaire 16 en entrée du compresseur haute-pression 22. Sur l'exemple de réalisation des figures 1 à 3, l'orifice de sortie 46 est unique et débouche dans la veine d'écoulement du flux secondaire 18 (où la pression qui y règne est inférieure à celle régnant dans la veine d'écoulement du flux primaire au niveau du col de cygne).

Alternativement, le ou les orifices de sortie du bras de liaison 36_b pourraient déboucher dans la structure fixe 37 du turboréacteur située entre les veines 16, 18. De façon connue, cette structure fixe 37 communique à son extrémité aval directement avec l'extérieur du turboréacteur (où la pression est également inférieure à la pression régnant dans la veine d'écoulement du flux primaire au niveau du col de cygne).

De même, il est bien entendu possible d'envisager que les orifices d'entrée et de sortie d'air soient positionnés sur d'autres parois du bras de liaison.

Ainsi, le différentiel de pression existant entre la veine d'écoulement du flux secondaire 18 où débouche l'orifice de sortie d'air 46 et la veine d'écoulement de flux primaire 16 au niveau du col de cygne permet de s'assurer qu'une partie du débit de flux primaire emprunte les orifices d'entrée d'air 44, circule à l'intérieur du bras de liaison 36b pour ressortir dans la veine d'écoulement de flux secondaire 18 en passant par l'orifice de sortie d'air 46.

Le bras de liaison 36b comprend en outre une sonde de température 48 dont l'élément sensible 50 est disposé à l'intérieur de la structure creuse. Ainsi, la sonde de température 48 permet de mesurer la température du flux primaire prélevé dans la veine d'écoulement de flux primaire 16 au niveau du col de cygne et circulant à l'intérieur de la structure creuse formant le bras de liaison 36b.

A titre d'exemple, la sonde de température 48 peut être du type crayon avec un fil en platine bobiné autour d'un mandrin, le tout étant recouvert d'une gaine de protection et constituant l'élément sensible de la sonde. Une telle sonde de température est bien connue de l'homme du métier et ne sera donc pas décrite en détails ici.

De préférence, la tête 52 de la sonde de température 48 est montée de façon étanche contre la paroi formant bord de fuite 40b du bras de liaison et est positionnée au niveau de la structure fixe 37 du turboréacteur située entre les veines 16 et 18 (ce qui la rend aisément accessible).

De préférence encore, l'élément sensible 50 de la sonde de température s'étend selon une direction sensiblement parallèle à l'axe longitudinal X-X et il est positionné radialement entre les orifices d'entrée d'air 44 et l'orifice de sortie d'air 46 de sorte qu'il se situe sur le trajet du débit gazeux circulant à l'intérieur du bras de liaison 36b.

De façon connue, la sonde de température est reliée au calculateur électronique du turboréacteur (non représenté sur les figures) où les données mesurées sont traitées.

On notera que les orifices d'entrée et de sortie d'air du bras de liaison 36b sont calibrés de sorte à prélever un débit de flux primaire suffisant pour permettre d'alimenter la sonde de température et ce quelque soit le régime de fonctionnement du turboréacteur. Ce débit minimal sera notamment fonction des caractéristiques de la sonde de température.

On notera également que le volume intérieur étanche dans lequel circule le flux primaire prélevé dans la veine 16 pourra être plus petit que le volume intérieur total du bras de liaison 36b (par exemple en ajoutant des cloisons). Ainsi, sur l'exemple de réalisation de la figure 4, une cloison 54 s'étendant radialement depuis la paroi transversale 42 formant fond est rajoutée afin d'améliorer l'écoulement de l'air autour de la sonde de température 48 en le confinant dans un espace restreint.

On notera encore que le temps de réponse de la sonde de température dû à son positionnement à l'intérieur d'un bras de liaison du carter intermédiaire pourra être compensé par un algorithme adéquat de traitement.

## Revendications

1. Turboréacteur à double flux comprenant un bras de liaison (36b) d'un carter intermédiaire (30) du turboréacteur et destinée à traverser radialement une veine d'écoulement du flux primaire (16) et une veine d'écoulement du flux secondaire (18) du turboréacteur, le bras de liaison (36b) ayant au moins un orifice d'entrée d'air (44) destiné à s'ouvrir dans la veine d'écoulement du flux primaire en entrée d'un compresseur (22) et au moins un orifice de sortie d'air (46) destiné à déboucher dans une zone du turboréacteur où la pression environnante est inférieure à la pression dans la veine d'écoulement du flux primaire en entrée du compresseur, characterisé en ce que le bras de liaison forme une structure creuse et hermétique, et en ce que le turboréacteur comprend en outre une sonde de température (48) dont l'élément sensible (50) est disposé à l'intérieur du bras de liaison pour mesurer la température de la veine d'écoulement du flux primaire.

2. Turboréacteur selon la revendication 1, dans lequel le bras de liaison (36b) comprend deux parois latérales (38) reliées entre elles de façon hermétique, d'une part par des parois formant bord d'attaque (40a) et bord de fuite (40b), et d'autre part par des parois transversales (42).

3. Turboréacteur selon la revendication 2, dans lequel l'orifice d'entrée d'air (44) du bras de liaison (36b) est formé dans une paroi latérale (38) et l'orifice de sortie d'air (46) est formé dans la paroi (40b) formant bord de fuite.

4. Turboréacteur selon l'une des revendications 2 et 3, dans lequel la sonde de température (48) est montée de façon étanche contre la paroi (40b) du bras de liaison formant bord de fuite.

5. Turboréacteur selon l'une quelconque des revendications 2 à 4, comprenant en outre une cloison (54) s'étendant radialement depuis l'une des parois transversales (42) afin d'améliorer l'écoulement de l'air autour de la sonde de température (48) en le confinant dans un espace restreint.

6. Turboréacteur selon l'une quelconque des revendications 1 à 5, dans lequel la sonde de température (48) est du type crayon.

7. Turboréacteur selon l'une quelconque des revendications 1 à 6, dans lequel l'orifice de sortie d'air (46) du bras de liaison (36b) est destiné à déboucher dans la veine d'écoulement du flux secondaire (18) du turboréacteur.

8. Turboréacteur selon l'une quelconque des revendications 1 à 7, dans lequel le carter intermédiaire (30) comprend un moyeu (32) et une virole annulaire extérieure (34) disposée autour du moyeu de façon concentrique à celui-ci, le bras de liaison (36b) reliant radialement le moyeu à la virole extérieure.

9. Turboréacteur selon la revendication 8, dans lequel l'élément sensible (50) de la sonde de température (48) est disposé à l'intérieur du bras de liaison (36b) de façon à s'étendre selon une direction sensiblement parallèle à l'axe de révolution (X-X) du moyeu et de la virole.

## Patentansprüche

1. Zweistrom-Turboluftstrahltriebwerk, umfassend einen Verbindungsarm (36b) eines Zwischengehäuses (30) des Turboluftstrahltriebwerks, der dazu bestimmt ist, einen Strömungskanal des Primärstroms (16) und einen Strömungskanal des Sekundärstroms (18) des Turboluftstrahltriebwerks radial zu durchqueren, wobei der Verbindungsarm (36b) wenigstens eine Lufteintrittsöffnung (44), die dazu bestimmt ist, sich in den Strömungskanal des Primärstroms am Eingang eines Verdichters (22) zu öffnen, sowie wenigstens eine Luftaustrittsöffnung (46) aufweist, die dazu bestimmt ist, in einen Bereich des Turboluftstrahltriebwerks zu münden, in dem der Umgebungsdruck unterhalb des Druckes in dem Strömungskanal des Primärstroms am Eingang des Verdichters liegt, **dadurch gekennzeichnet, dass** der Verbindungsarm eine hohle und hermetische Struktur bildet und dass das Turboluftstrahltriebwerk ferner einen Temperaturfühler (48) umfasst, dessen Fühlerelement (50) innerhalb des Verbindungsarms angeordnet ist, um die Temperatur des Strömungskanals des Primärstroms zu messen.

2. Turboluftstrahltriebwerk nach Anspruch 1, wobei der Verbindungsarm (36b) zwei Seitenwände (38) umfasst, die untereinander hermetisch verbunden sind, einerseits durch Wände, die eine Vorderkante (40a) und eine Hinterkante (40b) bilden, und andererseits durch Querwände (42).

3. Turboluftstrahltriebwerk nach Anspruch 2, wobei die Lufteintrittsöffnung (44) des Verbindungsarms (36b) in einer Seitenwand (38) ausgebildet ist und die Luftaustrittsöffnung (46) in der eine Hinterkante bildenden Wand (40b) ausgebildet ist.

4. Turboluftstrahltriebwerk nach einem der Ansprüche 2 und 3, wobei der Temperaturfühler (48) an der eine Hinterkante bildenden Wand (40b) des Verbindungsarms dicht angebracht ist.

5. Turboluftstrahltriebwerk nach einem der Ansprüche 2 bis 4, ferner umfassend eine Trennwand (54), die sich von einer der Querwände (42) aus radial erstreckt, um das Strömen der Luft um den Temperaturfühler (48) herum durch ihr Eingrenzen in einen beschränkten Raum zu verbessern.

6. Turboluftstrahltriebwerk nach einem der Ansprüche 1 bis 5, wobei der Temperaturfühler (48) vom Typ Stift ist.

7. Turboluftstrahltriebwerk nach einem der Ansprüche 1 bis 6, wobei die Luftaustrittsöffnung (46) des Verbindungsarms (36b) dazu bestimmt ist, in den Strömungskanal des Sekundärstroms (18) des Turboluftstrahltriebwerks zu münden.

8. Turboluftstrahltriebwerk nach einem der Ansprüche 1 bis 7, wobei das Zwischengehäuse (30) eine Nabe (32) und einen ringförmigen Außenring (34), der um die Nabe konzentrisch zu dieser angeordnet ist, umfasst, wobei der Verbindungsarm (36b) die Nabe mit dem Außenring radial verbindet.

9. Turboluftstrahltriebwerk nach Anspruch 8, wobei das Fühlerelement (50) des Temperaturfühlers (48) innerhalb des Verbindungsarms (36b) derart angeordnet ist, dass es sich in einer zu der Rotationsachse (X-X) der Nabe und des Rings im Wesentlichen parallelen Richtung erstreckt.

## Claims

1. A bypass turbojet comprising a connection arm (36b) of an intermediate casing (30) of the turbojet designed to pass radially through a flow passage (16) for the primary stream and a flow passage (18) for the secondary stream of the turbojet, the connection arm (36b) having at least one inlet air orifice (44) for opening out into the primary stream flow passage at the inlet of a compressor (22) and at least one air outlet orifice (46) for leading to a zone of the turbojet in which the surrounding pressure is less than the pressure in the primary stream flow passage at the inlet of the compressor, **characterised in that** the turbojet further comprises a temperature probe (48) having its sensitive element (50) arranged inside the connection arm for measuring the temperature in the primary stream flow passage.

2. A turbojet according to claim 1, wherein the connection arm (36b) comprises two side walls (38) connected together in airtight manner, firstly by walls forming a leading edge (40a) and a trailing edge (40b), and secondly by transverse walls (42).

3. A turbojet according to claim 2, wherein the air inlet orifice (44) of the connection arm (36b) is formed in a side wall (38) and the air outlet orifice (46) is formed in the wall (40b) forming the trailing edge.

4. A turbojet according to claim 2 or claim 3, wherein the temperature probe (48) is mounted in airtight manner against the wall (40b) of the connection arm that forms the trailing edge.

5. A turbojet according to any one of claims 2 to 4, further including a partition (54) extending radially from one of the transverse walls (42) in order to improve the flow of air around the temperature probe (48) by confining it in a restricted space.

6. A turbojet according to any one of claims 1 to 5, wherein the temperature probe (48) is of the pencil type.

7. A turbojet according to any one of claims 1 to 6, wherein the air outlet orifice (46) of the connection arm (36b) is designed to lead into the secondary stream flow passage (18) of the turbojet.

8. A turbojet according to any one of claims 1 to 7, wherein the intermediate casing (30) comprises a hub (32) and an outer annular shroud (34) arranged around the hub, concentrically thereabout, the connection arm (36b) connecting the hub radially to the outer shroud.

9. A turbojet according to claim 8, wherein the sensitive element (50) of the temperature probe (48) is arranged inside the connection arm (36b) in such a manner as to extend in a direction that is substantially parallel to the axis of revolution (X-X) of the hub and of the shroud.
